# EUROPÄISCHE PATENTANMELDUNG

(11) **EP 1 070 901 A2**
(43) Veröffentlichungstag der Anmeldung: **24.01.2001**
(21) Anmeldenummer: 00114929.3
(22) Anmeldetag: 18.07.2000
(51) Int. Cl.: F16L 41/08

(54) **Verfahren zum Anbinden eines Anschlussrohres an ein mittels eines Reliningrohres aus Kunststoffmaterial saniertes Hauptrohr**

(30) Priorität: 20.07.1999 DE 19933977
(71) Anmelder: Immo-Claudius Berg, 28199 Bremen (DE); F.W. Hundhausen GmbH, Kunststoffwerk, 28832 Achim (DE)
(72) Erfinder: Berg, Immo-Claudius, 28199 Bremen (DE)
(74) Vertreter: Philipp, Matthias, Dr.

(57) **Zusammenfassung**

Verfahren zum Anbinden eines Anschlußrohres (16) an ein mittels eines Reliningrohres (19) aus Kunststoffmaterial saniertes Hauptrohr (18), mit den folgenden Schritten: Lokalisieren des Mittelpunkts einer in der Nähe des zu dem Hauptrohr zeigenden Endes des Anschlußrohres befindlichen Einstichöffnung in dem Hauptrohr (18) von der Innenseite des Reliningrohres (19), Erzeugen einer Öffnung in dem Reliningrohr (19) im Bereich des lokalisierten Mittelpunkts durch Erwärmen des in besagtem Bereich befindlichen Kunststoffmaterials des Reliningrohres (19) von der Innenseite des Reliningrohres, Aufweiten der erzeugten Öffnung durch gleichzeitiges Ausüben von Druck auf die Innenseite des Reliningrohres (19) in Richtung auf das Anschlußrohr (16) und Erwärmen des Bereiches des Kunststoffmaterials, auf den der Druck ausgeübt wird, von der Innenseite des Reliningrohres, Anlegen des in das Anschlußrohr (16) ragenden Kunststoffmaterials des Reliningrohres (19) an die Innenseite des zu dem Hauptrohr (18) zeigenden Endes des Anschlußrohres (16), punktuelles oder flächiges Befestigen des Kunststoffmaterials an der Innenseite des Anschlußrohres (16), und Abflachen der Kunststoffmaterialenden und Befestigen derselben an der Innenseite des Anschlußrohres (16).

## Beschreibung

Die vorliegende Erfindung betrifft ein Verfahren zum Anbinden eines Anschlußrohres an ein mittels eines Reliningrohres aus Kunststoffmaterial saniertes Hauptrohr.

Wenn ein Anschlußrohr z.B. durch Absacken nicht mehr leckfrei mit einem Hauptrohr in Verbindung steht, wird das Hauptrohr durch Einsetzen eines Reliningrohres aus Kunststoff in selbiges saniert. Nachfolgend wird das Anschlußrohr wieder an das sanierte Hauptrohr angebunden. Dazu ist es erforderlich, daß eine Öffnung in dem Reliningrohr im Bereich einer in der Nähe des zu dem Hauptrohr zeigenden Endes des Anschlußrohres befindlichen Einstichöffnung erzeugt wird. Dies geschieht im Stand der Technik durch Fräsen, Schneiden, Schweißen oder Lasern. Alle vorgenannten Öffnungsverfahren weisen die jedoch die folgenden Nachteile auf:
i) Zum Öffnen werden Werkzeuge benötigt, die immer wieder erneuert werden müssen.
ii) Es ist keine sickerfreie Verbindung zwischen dem Hauptrohr und dem Anschlußrohr möglich.
iii) Das Grundwasser wird durch Spaltbildung zwischen dem Haupt- und dem Anschlußrohr noch mehr gefährdet.
iv) Bei einem falschen Vermessen bzw. nicht hundertprozentig lokalisierten Einstichöffnungen können erhebliche Zerstörungen verursacht werden. Dies macht einen Zugang notwendig und verursacht somit erhebliche Kosten.
v) Es sind nur bestimmte Querschnittsgrößen öffenbar.

Der Erfindung liegt somit die Aufgabe zugrunde, ein gattungsgemäßes Verfahren bereitzustellen, mit dem ein optimales Anbinden eines Anschlußrohres an ein Hauptrohr ermöglicht wird.

Erfindungsgemäß wird diese Aufgabe gelöst durch ein Verfahren zum Anbinden eines Anschlußrohres an ein mittels eines Reliningrohres aus Kunststoffmaterial saniertes Hauptrohr, mit dem folgenden Schritten: Lokalisieren des Mittelpunkts einer in der Nähe des zu dem Hauptrohr zeigenden Endes des Anschlußrohres befindlichen Einstichöffnung in dem Hauptrohr von der Innenseite des Reliningrohres, Erzeugen einer Öffnung in dem Reliningrohr im Bereich des lokalisierten Mittelpunkts durch Erwärmen des in besagtem Bereich befindlichen Kunststoffmaterials des Reliningrohres von der Innenseite des Reliningrohres, Aufweiten der erzeugten Öffnung durch gleichzeitiges Ausüben von Druck auf die Innenseite des Reliningrohres in Richtung auf das Anschlußrohr und Erwärmen des Bereiches des Kunststoffmaterials, auf den der Druck ausgeübt wird, von der Innenseite des Reliningrohres, Anlegen des in das Anschlußrohr ragenden Kunststoffmaterials des Reliningrohres an die Innenseite des zu dem Hauptrohr zeigenden Endes des Anschlußrohres, punktuelles oder flächiges Befestigen des Kunststoffmaterials an der Innenseite des Anschlußrohres, und Abflachen der Kunststoffmaterialenden und Befestigen derselben an der Innenseite des Anschlußrohres.

Insbesondere kann dabei vorgesehen sein, daß der Mittelpunkt mittels Ultralschall- oder Sonar-Technik lokalisiert wird.

Vorzugsweise wird die Erwärmtemperatur zum Erzeugen der Öffnung in Abhängigkeit von der Art des Kunststoffmaterials gewählt.

Günstigerweise wird die Erwärmtemperatur zum Aufweiten der Öffnung in Abhängigkeit von der Art des Kunststoffmaterials gewählt.

Weiterhin kann vorgesehen sein, daß die Öffnung auf eine runde oder ovale Öffnung aufgeweitet wird.

Vorteilhafterweise wird das in das Anschlußrohr ragende Kunststoffmaterial beginnend an dem zu dem Hauptrohr zeigende Ende des Anschlußrohres angelegt.

Bei einer weiteren besonderen Ausführungsform der Erfindung kann vorgesehen sein, daß das Kunststoffmaterial durch Verkleben oder Verschweißen an der Innenseite des Anschlußrohres befestigt wird.

Günstigerweise werden die Kunststoffmaterialenden durch Erwärmen abgeflacht.

Außerdem kann vorgesehen sein, daß die Kunststoffmaterialenden durch Strecken abgeflacht werden.

Ferner kann vorgesehen sein, daß die Kunststoffmaterialenden durch Verkleben oder Verschweißen an der Innenseite des Anschlußrohres befestigt werden.

Schließlich kann vorgesehen sein, daß die Formgebung des Anschlusses halb-elektronisch oder halb-mechanisch überwacht wird. Unter Formgebung ist unter anderem die Querschnittsform des Anschlusses, z.B. rund oder oval, und der Winkel zum Hauptrohr zu verstehen.

Der Erfindung liegt die überraschende Erkenntnis zugrunde, daß das zum Erzeugen einer Öffnung zu dem Anschlußrohr normalerweise zu entfernende Kunststoffmaterial des Reliningrohrrohres zur Herstellung einer sickerfreien Verbindung zwischen dem Hauptrohr und dem Anschlußrohr verwendbar ist. Dies bedeutet, daß eine optimale Verbindung ohne zusätzliches Material realisierbar ist. Die Form des Anschlusses sowie der Eintrittswinkel sind dabei nicht hinderlich. Zudem können alle Arten von Kunststoffen bearbeitet werden. Darüber hinaus tritt keine Beschädigung des Hauptrohres (Trägerrohr) ein.

Weitere Merkmale und Vorteile der Erfindung ergeben sich aus den Ansprüchen und aus der nachstehenden Beschreibung, in der ein Ausführungsbeispiel anhand der schematischen Zeichnungen im einzelnen erläutert ist. Dabei zeigt:
Fig. 1 einen Schnitt durch ein saniertes Hauptrohr, in dem sich eine Vorrichtung zur Durchführung des Verfahrens gemäß einer besonderen Ausführungsform befindet; und
Fig. 2 bis 6 Phasen der besonderen Ausführungsform des erfindungsgemäßen Verfahrens.

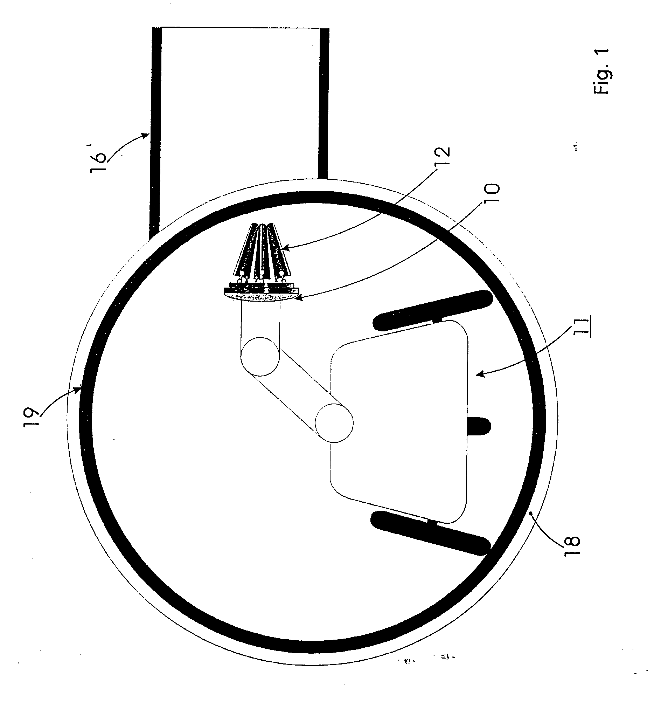

Fig. 1 zeigt einen Schnitt durch ein Hauptrohr 18, in dem sich eine Verfahreinrichtung 11 mit einer Lokalisierungseinrichtung 10 und einem Arbeitskopf 12 zum Anbinden eines Anschlußrohres 16 an das mittels eines Reliningrohres 19 aus Kunststoffmaterial sanierte Hauptrohr 18 befindet. Der Arbeitskopf 12 könnte sich alternativ auch auf einer Sonde befinden. Die Lokalisierungseinrichtung 10 kann z.B. ein Ultraschall- oder Sonar-Gerät umfassen. Ein Arbeitskopf kann je nach Größe beispielsweise über 2 bis 10 Heizeinrichtungen (nicht gezeigt) verfügen.

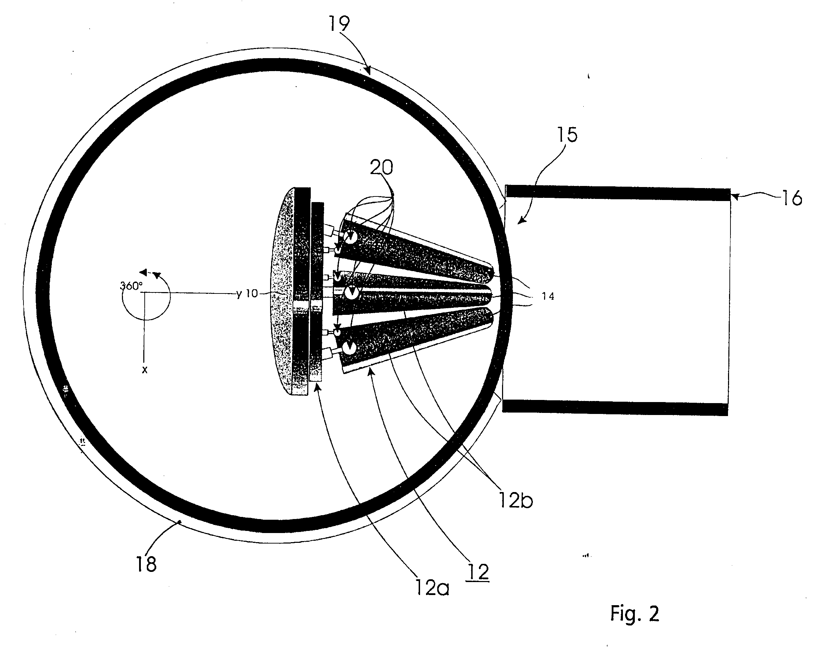

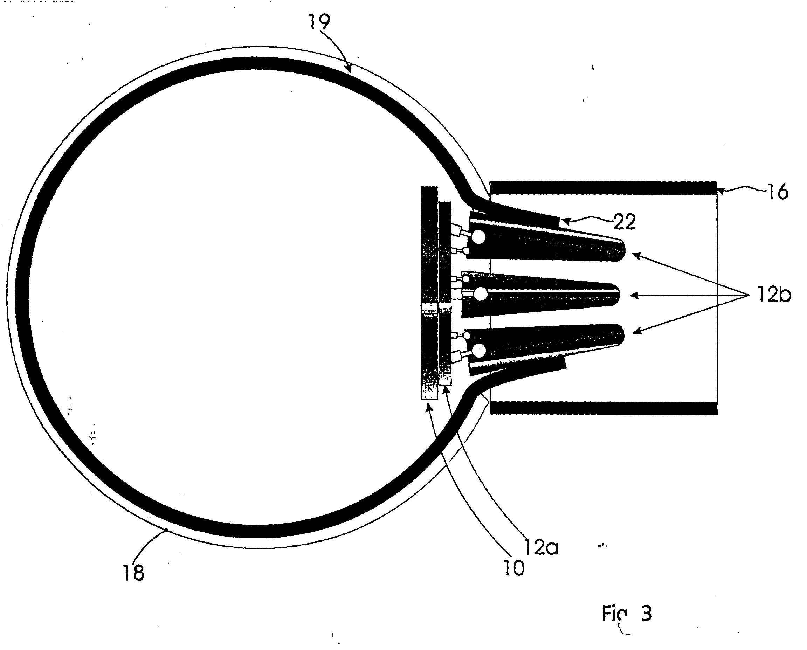

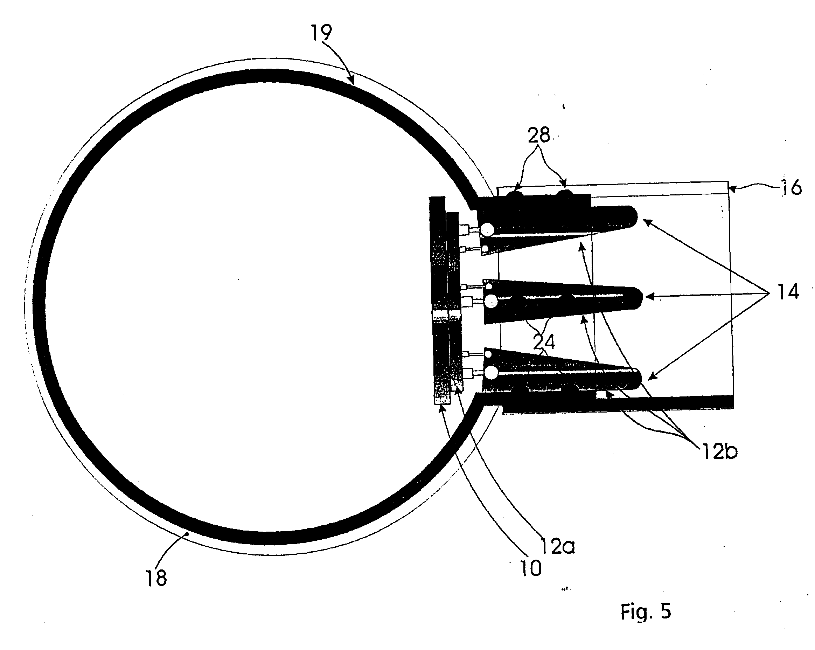

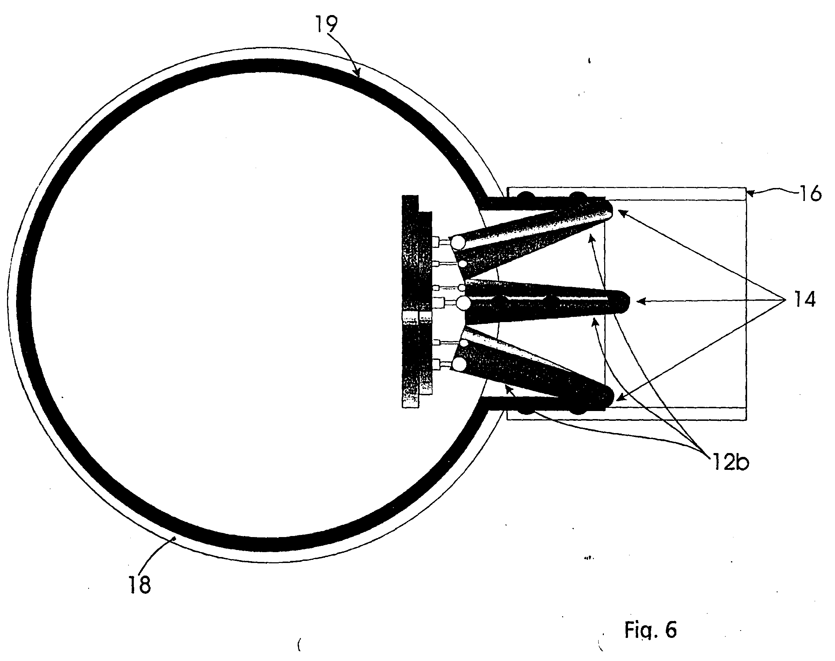

Fig. 2 bis 6 zeigen jeweilige Phasen der besonderen Ausführungsform des erfindungsgemäßen Verfahrens. Der Übersichtlichkeit halber ist die Verfahreinrichtung 11 weggelassen und sind die Lokalisierungseinrichtung und der Arbeitskopf 12 nicht maßstabsgerecht dargestellt worden. Der Arbeitskopf 12 umfaßt eine Platte 12a, auf der im vorliegenden Beispiel drei Finger 12b angeordnet sind, die über Hydraulikzylinder 23 räumlich schwenkbar sind. Darüber hinaus sind die Finger 12b aufgrund der Verschiebbarkeit der Hydraulikzylinder 20 in radialer Richtung verschiebbar. Der Arbeitskopf 12 ist gemeinsam mit der Lokalisierungseinrichtung 10 um 360° um die x-Achse und um 120° um die y-Achse drehbar. Dadurch läßt sich das Kunststoffmaterial des Reliningrohres 19 kontinuierlich bis zur gewünschten Form zu der Innenseite des Anschlußrohres 16 verformen. In der jeweiligen Spitze der Finger 12b befindet/befinden sich ein oder mehrere Heizeinrichtungen 14. Vorzugsweise handelt es sich dabei um Thermoelemente. Darüber hinaus befinden sich entlang der Finger 12b in Abhängigkeit von der erforderlichen Wärmemenge ein oder mehrere weitere Heizeinrichtungen 24 (siehe Fig. 5) zum Schmelzen des Kunststoffmaterials des Reliningrohres 19, die der Übersichtlichkeit halber in den Fig. 2 bis 4 weggelassen sind. In Fig. 2 wird die Lokalisierungseinrichtung 10 gerade dazu benutzt, den Mittelpunkt einer in der Nähe des zu dem Hauptrohr 19 zeigenden Endes des Anschlußrohres 16 befindlichen Einstichöffnung 15 zu lokalisieren. Zwischen den in den Fig. 2 und 3 gezeigten Verfahrensschritten wird der Arbeitskopf 12 gemeinsam mit der Lokalisierungseinrichtung 10 in Richtung des Anschlußrohres 16 vorgetrieben, wodurch die Heizeinrichtungen 14 das Kunststoffmaterial des Reliningrohres 19 in dem Bereich um den lokalisierten Mittelpunkt der Einstichöffnung 15 berühren und das Kunststoffmaterial aufschmelzen. Die erzeugte Öffnung wird in Fig. 3 durch weiteres Vortreiben des Arbeitskopfes 12 gemeinsam mit der Lokalisierungseinrichtung 10 in das Anschlußrohr 16, wodurch auf die Innenseite des Reliningrohres 19 Druck ausgeübt wird, und Erwärmen des Bereiches des Kunststoffmaterials, auf den der Druck ausgeübt wird, durch weitere Heizeinrichtungen 24 (hier nicht gezeigt, siehe Fig. 5 und 6) vorzugsweise in Form von Thermoelementen aufgeweitet. Bezugszeichen 22 kennzeichnet den aufgeweiteten Anschluß.

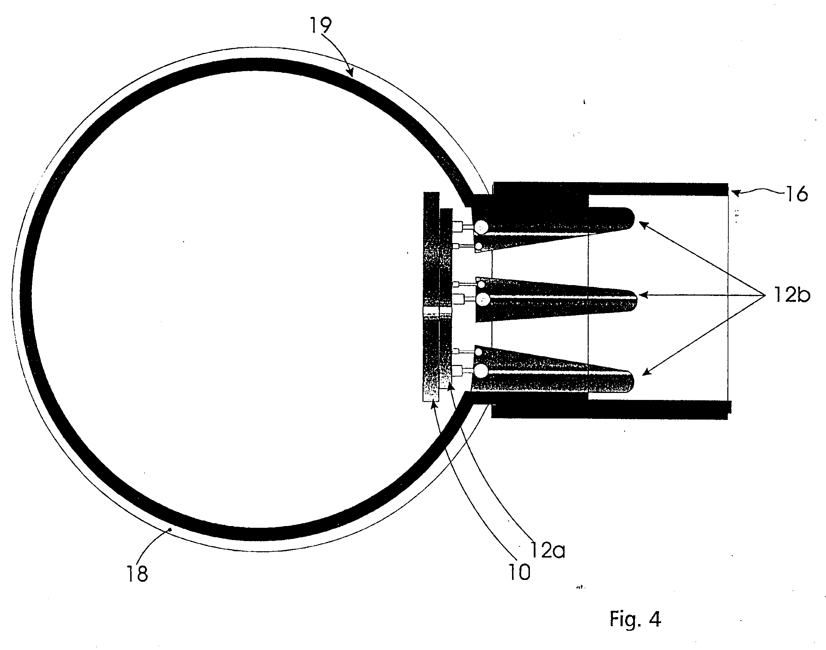

In Figur 4 wird das in das Anschlußrohr 16 ragende Kunststoffmaterial des Reliningrohres 19 durch Bewegen der beiden äußeren Finger 12b an die Innenseite des zu dem Hauptrohr zeigenden Endes des Anschlußrohres 16 angelegt.

In Fig. 5 wird das in das Außenrohr 16 hineinragende Kunststoffmaterial des Reliningrohres 19 durch punktuelles Erwärmen mittels der Heizeinrichtungen 24 punktuell an dem Außenrohr 16 befestigt, wobei die Befestigung zuerst an der in der Fig.5 links befindlichen Stelle vorgenommen wird. Schließlich werden in Fig. 6 die Kunststoffmaterialenden durch Erwärmen mittels der Heizeinrichtungen 14 abgeflacht und an der Innenseite des Anschlußrohres 16 befestigt.

Anstelle der Hydraulikzylinder 20 kann auch eine geeignete Mechanik verwendet werden. Für die Bearbeitung (Schmelzen, Verformen) verschiedener Kunststoffmaterialien wird im Arbeitskopf 12 die Temperatur dem jeweiligen Kunststoffmaterial angepaßt. Die Überwachung der Formgebung des Anschlusses 22 kann auf halb-elektronischem oder halb-mechanischem Weg mittels Fühler erreicht werden. Es können sowohl ovale als auch runde Einstichöffnungen geöffnet werden. Ebenso können Einstichöffnungen mit von 90°-Winkeln abweichenden Eintrittswinkeln geöffnet werden.

Durch das Abflachen und Befestigen der Kunststoffmaterialenden wird ein Durchsickern von Schadstoffen in das Erdreich verhindert. Zusätzlich kann die Dicke des angelegten Kunststoffmaterials durch Strecken während des Bearbeitungsvorgangs verändert, z.B. verdünnt werden.

Die in der vorstehenden Beschreibung sowie in den Ansprüchen und der beiliegenden Zeichnung offenbarten Merkmalen der Erfindung können sowohl einzeln als auch in beliebiger Kombination für die Verwirklichung der Erfindung in ihren verschiedenen Ausführungsformen wesentlich sein.

### Bezugszeichenliste

- 10: Lokalisierungseinrichtung
- 11: Verfahreinrichtung
- 12: Arbeitskopf
- 12a: Platte
- 12b: Finger
- 14: Heizeinrichtung
- 15: Einsichöffnung
- 16: Anschlußrohr
- 18: Hauptrohr
- 19: Reliningrohr
- 20: Hydraulikzylinder
- 22: Anschluß
- 24: Heizeinrichtung
- 26: Heizkopf
- 28: Hebeverbindung
- 30: verschmolzenes Ende

## Patentansprüche

1. Verfahren zum Anbinden eines Anschlußrohres an ein mittels eines Reliningrohres aus Kunststoffmaterial saniertes Hauptrohr, mit den folgenden Schritten:
a) Lokalisieren des Mittelpunkts einer in der Nähe des zu dem Hauptrohr zeigenden Endes des Anschlußrohres befindlichen Einstichöffnung in dem Hauptrohr von der Innenseite des Reliningrohres,
b) Erzeugen einer Öffnung in dem Reliningrohr im Bereich des lokalisierten Mittelpunkts durch Erwärmen des in besagtem Bereich befindlichen Kunststoffmaterials des Reliningrohres von der Innenseite des Reliningrohres,
c) Aufweiten der erzeugten Öffnung durch gleichzeitiges Ausüben von Druck auf die Innenseite des Reliningrohres in Richtung auf das Anschlußrohr und Erwärmen des Bereiches des Kunststoffmaterials, auf den der Druck ausgeübt wird, von der Innenseite des Reliningrohres,
d) Anlegen des in das Anschlußrohr ragenden Kunststoffmaterials des Reliningrohres an die Innenseite des zu dem Hauptrohr zeigenden Endes des Anschlußrohres,
e) Punktuelles oder flächiges Befestigen des Kunststoffmaterials an der Innenseite des Anschlußrohres, und
f) Abflachen der Kunststoffmaterialenden und Befestigen derselben an der Innenseite des Anschlußrohres.

2. Verfahren nach Anspruch 1, dadurch gekennzeichnet, daß der Mittelpunkt mittels Ultraschall- oder Sonar-Technik lokalisiert wird.

3. Verfahren nach Anspruch 1 oder 2, dadurch gekennzeichnet, daß die Erwärmtemperatur zum Erzeugen der Öffnung in Abhängigkeit von der Art des Kunststoffmaterials gewählt wird.

4. Verfahren nach einem der Ansprüche 1 bis 3, dadurch gekennzeichnet, daß die Erwärmtemperatur zum Aufweiten der Öffnung in Abhängigkeit von der Art des Kunststoffmaterials gewählt wird.

5. Verfahren nach einem der vorangehenden Ansprüche, dadurch gekennzeichnet, daß die Öffnung auf eine runde oder ovale Öffnung aufgeweitet wird.

6. Verfahren nach einem der vorangehenden Ansprüche, dadurch gekennzeichnet, daß das in das Anschlußrohr ragende Kunststoffmaterial beginnend an dem zu dem Hauptrohr zeigenden Ende des Anschlußrohres angelegt wird.

7. Verfahren nach einem der vorangehenden Ansprüche, dadurch gekennzeichnet, daß das Kunststoffmaterial durch Verkleben oder Verschweißen an der Innenseite des Anschlußrohres befestigt wird.

8. Verfahren nach einem der vorangehenden Ansprüche, dadurch gekennzeichnet, daß die Kunststoffmaterialenden durch Erwärmen abgeflacht werden.

9. Verfahren nach einem der vorangehenden Ansprüche, dadurch gekennzeichnet, daß die Kunststoffmaterialenden durch Strecken abgeflacht werden.

10. Verfahren nach einem der vorangehenden Ansprüche, dadurch gekennzeichnet, daß die Kunststoffmaterialenden durch Verkleben oder Verschweißen an der Innenseite des Anschlußrohres befestigt werden.

11. Verfahren nach einem der vorangehenden Ansprüche, dadurch gekennzeichnet, daß die Formgebung des Anschlusses halb-elektronisch oder halb-mechanisch überwacht wird.
